(19) Europäisches Patentamt
European Patent Office
Office européen des brevets

(11) **EP 4 329 077 A1**

(12) **EUROPEAN PATENT APPLICATION**
published in accordance with Art. 153(4) EPC

(43) Date of publication:
**28.02.2024 Bulletin 2024/09**

(21) Application number: **22799178.3**

(22) Date of filing: **09.05.2022**

(51) International Patent Classification (IPC):
$H01M\ 50/451^{(2021.01)}$    $H01M\ 50/417^{(2021.01)}$
$H01M\ 50/489^{(2021.01)}$    $H01M\ 50/403^{(2021.01)}$
$H01M\ 10/052^{(2010.01)}$

(52) Cooperative Patent Classification (CPC):
**H01M 10/052; H01M 50/403; H01M 50/417;
H01M 50/451; H01M 50/489;** Y02E 60/10

(86) International application number:
**PCT/KR2022/006580**

(87) International publication number:
**WO 2022/235135 (10.11.2022 Gazette 2022/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.05.2021 KR 20210059581**

(71) Applicant: **LG Chem, Ltd.
Seoul 07336 (KR)**

(72) Inventors:
• **HAN, Sung-Jae
Daejeon 34122 (KR)**
• **LEE, Joo-Sung
Daejeon 34122 (KR)**
• **MUN, Sung Cik
Daejeon 34122 (KR)**
• **JUNG, Kil-An
Daejeon 34122 (KR)**

(74) Representative: **Hoffmann Eitle
Patent- und Rechtsanwälte PartmbB
Arabellastraße 30
81925 München (DE)**

(54) **CROSSLINKED STRUCTURE-CONTAINING SEPARATOR FOR LITHIUM SECONDARY BATTERY, PREPARATION METHOD THEREFOR, AND LITHIUM SECONDARY BATTERY INCLUDING SEPARATOR**

(57) The present disclosure relates to a crosslinked structure-containing separator for a lithium secondary battery, including: a crosslinked structure-containing polyolefin porous support having a crosslinked structure including polymer chains interconnected directly with one another; an inorganic composite porous layer disposed on at least one surface of the crosslinked structure-containing polyolefin porous support and including an inorganic filler and a first binder polymer; and a porous adhesive layer disposed on the inorganic composite porous layer and including a second binder polymer. The present disclosure also relates to a method for preparing the separator and a lithium secondary battery including the separator. The crosslinked structure-containing separator for a lithium secondary battery shows improved high-temperature safety and excellent adhesion to an electrode. The method for manufacturing a crosslinked structure-containing separator for a lithium secondary battery includes adding a photoinitiator to a coating solution for forming a porous adhesive layer, and thus requires no additional equipment for the photocrosslinking of a polyolefin porous support, thereby realizing a simplified process

FIG. 1

**Description**

TECHNICAL FIELD

The present application claims priority to Korean Patent Application No. 10-2021-0059581 filed on May 7, 2021 in the Republic of Korea.

The present disclosure relates to a crosslinked structure-containing separator for a lithium secondary battery, a method for manufacturing the same, and a lithium secondary battery including the same separator.

BACKGROUND ART

Recently, energy storage technology has been given an increasing attention. As the application of energy storage technology has been extended to energy for cellular phones, camcorders and notebook PCs and even to energy for electric vehicles, there has been an increasing need for providing batteries used as power sources for such electronic devices with high energy density. Lithium secondary batteries are those satisfying such a need best. Therefore, active studies have been conducted about such lithium secondary batteries.

Such a lithium secondary battery includes a positive electrode, a negative electrode, an electrolyte and a separator. Particularly, it is required for the separator to have insulation property for separating and electrically insulating the positive electrode and the negative electrode from each other and high ion conductivity for increasing lithium ion permeability based on high porosity.

A polyolefin separator has been used widely as such a separator. However, in the case of a typical polyolefin separator, a polyethylene (PE) separator, it has a low melting point ($T_m$) and may cause ignition and explosion, when a battery is used abnormally and the battery temperature is increased to the melting point of polyethylene or higher to generate a meltdown phenomenon, and also shows a severe heat shrinking behavior under a high temperature condition due to its material property and characteristics during its manufacturing process, thereby causing a safety-related problem, such as an internal short-circuit.

Therefore, there is an imminent need for a separator capable of ensuring safety at high temperature.

DISCLOSURE

Technical Problem

The present disclosure is designed to solve the problems of the related art, and therefore the present disclosure is directed to providing a crosslinked structure-containing separator for a lithium secondary battery having improved high-temperature safety and a lithium secondary battery including the same.

The present disclosure is also directed to providing a simplified method for manufacturing a crosslinked structure-containing separator for a lithium secondary battery having improved high-temperature safety.

Technical Solution

In one aspect of the present disclosure, there is provided a crosslinked structure-containing separator for a lithium secondary battery according to any one of the following embodiments.

According to the first embodiment, there is provided a crosslinked structure-containing separator for a lithium secondary battery, including:

   a crosslinked structure-containing polyolefin porous support having a crosslinked structure including polymer chains interconnected directly with one another;
   an inorganic composite porous layer disposed on at least one surface of the crosslinked structure-containing polyolefin porous support and including an inorganic filler and a first binder polymer; and
   a porous adhesive layer disposed on the inorganic composite porous layer and including a second binder polymer.

According to the second embodiment, there is provided the crosslinked structure-containing separator for a lithium secondary battery as defined in the first embodiment, which shows a heat shrinkage of 20% or less in each of the machine direction and the transverse direction, as determined after allowing the separator to stand at 150°C for 30 minutes.

According to the third embodiment, there is provided the crosslinked structure-containing separator for a lithium secondary battery as defined in the first or the second embodiment, wherein the weight ratio of the inorganic filler to the first binder is 95:5-99.9:0.1.

According to the fourth embodiment, there is provided the crosslinked structure-containing separator for a lithium secondary battery as defined in any one of the first to the third embodiments, wherein the first binder polymer includes an acrylic polymer, polyacrylic acid, styrene butadiene rubber, polyvinyl alcohol, or two or more of them. According to the fifth embodiment, there is provided the crosslinked structure-containing separator for a lithium secondary battery as defined in any one of the first to the fourth embodiments, wherein the second binder polymer includes poly(vinylidene fluoride), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(methyl methacrylate), poly(ethylhexyl acrylate), poly(butyl acrylate), poly(acrylonitrile), poly(vinyl pyrrolidone), poly(vinyl acetate), poly(ethylhexyl acrylate-co-methyl methacrylate), poly(ethylene-co-vinyl acetate), polyethylene oxide, poly(arylate), or two or more of them.

According to the sixth embodiment, there is provided the crosslinked structure-containing separator for a lithium secondary battery as defined in any one of the first to the fifth embodiments, wherein the porous adhesive layer has a pattern having at least one adhesive portion containing the second binder polymer and at least one non-coated portion having no adhesive portion.

According to the seventh embodiment, there is provided the crosslinked structure-containing separator for a lithium secondary battery as defined in any one of the first to the sixth embodiments, which has a meltdown temperature of 160°C or higher.

According to the eighth embodiment, there is provided the crosslinked structure-containing separator for a lithium secondary battery as defined in any one of the first to the seventh embodiments, which has a shutdown temperature of 145°C or less.

In another aspect of the present disclosure, there is provided a method for manufacturing a crosslinked structure-containing separator for a lithium secondary battery according to any one of the following embodiments.

According to the ninth embodiment, there is provided a method for manufacturing a crosslinked structure-containing separator for a lithium secondary battery, including the steps of:

(S1) preparing a slurry for forming an inorganic composite porous layer including an inorganic filler, a first binder polymer and a dispersion medium;
(S2) coating the slurry for forming an inorganic composite porous layer on at least one surface of a polyolefin porous support, followed by drying, to form an inorganic composite porous layer;
(S3) applying a coating solution for forming a porous adhesive layer including a second binder polymer, a solvent for the second binder polymer and a photoinitiator to the top surface of the inorganic composite porous layer;
(S4) dipping the resultant product of step (S3) in a solidifying solution containing a non-solvent for the second binder polymer, followed by drying, to form a porous adhesive layer; and
(S5) irradiating ultraviolet rays to the resultant product of step (S4).

According to the tenth embodiment, there is provided the method for manufacturing a crosslinked structure-containing separator for a lithium secondary battery as defined in the ninth embodiment, wherein the content of the photoinitiator is 0.015-0.3 parts by weight based on 100 parts by weight of the polyolefin porous support.

According to the eleventh embodiment, there is provided the method for manufacturing a crosslinked structure-containing separator for a lithium secondary battery as defined in the ninth or the tenth embodiment, wherein the weight ratio of the inorganic filler to the first binder polymer is 95:5-99.9:0.1.

According to the twelfth embodiment, there is provided the method for manufacturing a crosslinked structure-containing separator for a lithium secondary battery as defined in any one of the ninth to the eleventh embodiments, wherein the first binder polymer includes an acrylic polymer, polyacrylic acid, styrene butadiene rubber, polyvinyl alcohol, or two or more of them.

According to the thirteenth embodiment, there is provided the method for manufacturing a crosslinked structure-containing separator for a lithium secondary battery as defined in any one of the ninth to the twelfth embodiments, wherein the dispersion medium is an aqueous dispersion medium.

According to the fourteenth embodiment, there is provided the method for manufacturing a crosslinked structure-containing separator for a lithium secondary battery as defined in any one of the ninth to the thirteenth embodiments, wherein the second binder polymer includes poly(vinylidene fluoride), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(methyl methacrylate), poly(ethylhexyl acrylate), poly(butyl acrylate), poly(acrylonitrile), poly(vinyl pyrrolidone), poly(vinyl acetate), poly(ethylhexyl acrylate-co-methyl methacrylate), poly(ethylene-co-vinyl acetate), polyethylene oxide, poly(arylate), or two or more of them.

According to the fifteenth embodiment, there is provided the method for manufacturing a crosslinked structure-containing separator for a lithium secondary battery as defined in any one of the ninth to the fourteenth embodiments, wherein the solvent for the second binder polymer includes: a cycloaliphatic hydrocarbon, such as cyclopentane and cyclohexane; an aromatic hydrocarbon, such as toluene, xylene and ethylbenzene; ketone, such as acetone, ethyl methyl ketone, diisopropyl ketone, cyclohexanone, methylcyclohexane and ethylcyclohexane; chlorinated aliphatic hydrocarbon, such as methylene chloride, chloroform and tetrachlorocarbon; ester, such as ethyl acetate, butyl acetate, γ-butyrolactone and ε-caprolactone; acylonitrile, such as acetonitrile and propionitrile; ether, such as tetrahydrofuran and ethylene glycol diethyl ether; alcohol, such as methanol, ethanol, isopropanol, ethylene glycol and ethylene glycol monomethyl ether; amide, such as N-methyl pyrrolidone and N,N-dimethylformamide; or two or more of them.

According to the sixteenth embodiment, there is provided the method for manufacturing a crosslinked structure-containing separator for a lithium secondary battery as defined in any one of the ninth to the fifteenth embodiments, wherein the photoinitiator includes a Type 2 photoinitiator.

According to the seventeenth embodiment, there is provided the method for manufacturing a crosslinked structure-containing separator for a lithium secondary battery as defined in any one of the ninth to the sixteenth embodiments, wherein the photoinitiator includes thioxanthone (TX), a thioxanthone derivative, benzophenone (BPO), a benzophenone derivative, or two or more of them.

According to the eighteenth embodiment, there is provided the method for manufacturing a crosslinked structure-containing separator for a lithium secondary battery as defined in any one of the ninth to the seventeenth embodiments, wherein the ultraviolet rays are irradiated at an irradiation light dose of 10-2000 mJ/cm$^2$.

In still another aspect of the present disclosure, there is provided a lithium secondary battery according to the following embodiment.

According to the nineteenth embodiment, there is provided a lithium secondary battery including a positive electrode, a negative electrode and a separator interposed between the positive electrode and the negative electrode, wherein the separator is the crosslinked structure-containing separator for a lithium secondary battery as defined in any one of the first to the eighth embodiments.

Advantageous Effects

The crosslinked structure-containing separator for a lithium secondary battery according to the present disclosure shows improved high-temperature safety and excellent adhesion to an electrode.

The method for manufacturing a crosslinked structure-containing separator for a lithium secondary battery according to the present disclosure includes adding a photoinitiator to a coating solution for forming a porous adhesive layer, and thus requires no additional equipment for the photo-crosslinking of a polyolefin porous support, thereby realizing a simplified process.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a schematic view illustrating the crosslinked structure-containing separator for a lithium secondary battery according to an embodiment of the present disclosure.
FIG. 2 is a graph illustrating the meltdown temperature of each of the separators obtained according to Example 1, Comparative Example 1 and Comparative Example 2 in the machine direction, as determined by thermomechanical analysis.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the terms, such as 'first', 'second', 'third' and 'fourth', are used to differentiate one constitutional element from the other constitutional elements, and each constitutional element is not limited to such terms.

The crosslinked structure-containing separator according to an embodiment of the present disclosure includes:

a crosslinked structure-containing polyolefin porous support having a crosslinked structure including polymer chains interconnected directly with one another;

an inorganic composite porous layer disposed on at least one surface of the crosslinked structure-containing polyolefin porous support and including an inorganic filler and a first binder polymer; and

a porous adhesive layer disposed on the inorganic composite porous layer and including a second binder polymer.

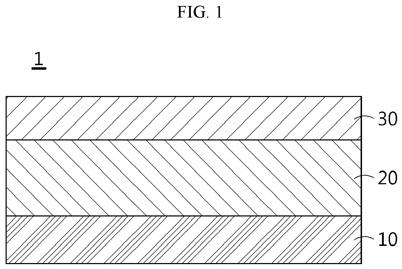

FIG. 1 is a schematic view illustrating the crosslinked structure-containing separator for a lithium secondary battery according to an embodiment of the present disclosure.

Referring to FIG. 1, the crosslinked structure-containing separator 1 for a lithium secondary battery according to an embodiment of the present disclosure includes a crosslinked structure-containing polyolefin porous support 10.

Herein, the expression 'crosslinked structure including polymer chains interconnected directly with one another' means a structure in which polymer chains substantially including polyolefin, preferably, including polyolefin alone, are provided with reactivity through the addition of a photoinitiator, and are crosslinked directly with one another. Therefore, crosslinking that occurs between polymer chains and an additionally introduced crosslinking agent does not correspond to 'crosslinked structure including polymer chains interconnected directly with one another' as defined herein. In addition, crosslinking that occurs between such an additional crosslinking agent and polymer chains does not correspond to 'crosslinked structure including polymer chains interconnected directly with one another' as define herein, even though the polymer chains substantially include polyolefin or include polyolefin alone.

Photoinitiators may be crosslinked with one another, or a photoinitiator may be crosslinked with a polymer chain. However, such a crosslinked structure has a lower reaction enthalpy as compared to the crosslinked structure among the polymer chains in the polyolefin porous support, and may be decomposed during charge/discharge of a battery to cause side reactions. According to an embodiment of the present disclosure, the crosslinked structure-containing polyolefin porous support may include only the crosslinked structure including polymer chains interconnected directly with one another, while not including the crosslinked structure including a polymer chain interconnected directly with a photoinitiator.

According to an embodiment of the present disclosure, the crosslinked structure-containing polyolefin porous support includes only the crosslinked structure including polymer chains interconnected directly with one another, while not including the crosslinked structure including a polymer chain interconnected directly with a photoinitiator.

The crosslinked structure-containing separator for a lithium secondary battery according to an embodiment of the present disclosure includes a crosslinked structure-containing polyolefin porous support 10 including polymer chains interconnected directly with one another, and thus may provide improved heat resistance.

According to an embodiment of the present disclosure, the polyolefin porous support may be a porous film.

According to an embodiment of the present disclosure, the polyolefin may include polyethylene; polypropylene; polybutylene; polypentene; polyhexene; polyoctene; a copolymer of at least two of ethylene, propylene, butene, pentene, 4-methylpentene, hexane, heptane and octene; or a mixture thereof.

Non-limiting examples of the polyethylene include low-density polyethylene (LDPE), linear low-density polyethylene (LLDPE), high-density polyethylene (HDPE), or the like. Among those, when the polyethylene is high-density polyethylene having a high crystallization degree and a high resin melting point, it is possible to provide a desired level of heat resistance and an increased modulus.

According to an embodiment of the present disclosure, the polyolefin may have a weight average molecular weight of 200,000-1,500,000, 220,000-100,000, or 250,000-800,000. When the polyolefin has the above-defined range of weight average molecular weight, it is possible to provide excellent strength and heat resistance, while ensuring the uniformity and film-forming processability of the polyolefin porous support.

Herein, the weight average molecular weight may be determined by using gel permeation chromatography (GPC) (PL GPC220, Agilent Technologies) under the following analysis conditions:

- Column: PL Olexis (Polymer Laboratories)
- Solvent: Trichlorobenzene (TCB)
- Flow rate: 1.0 mL/min
- Sample concentration: 1.0 mg/mL
- Injection amount: 200 $\mu$L
- Column temperature: 160°C
- Detector: Agilent High Temperature RI detector
- Standard: Polystyrene (corrected with tertiary function)

According to an embodiment of the present disclosure, the crosslinked structure-containing polyolefin porous support may have a crosslinking degree of 10-80%, 30-55%, 10-45%, 15-40%, or 20-35%. When the crosslinked structure-containing polyolefin porous support has the above-defined range of crosslinking degree, it is possible to provide an increased modulus with ease, while providing a desired level of heat resistance. For example, when the crosslinked structure-containing polyolefin porous support has a crosslinking degree of 20% or more, the crosslinked structure-containing polyolefin porous support may easily have a meltdown temperature of 170°C or higher.

Herein, the crosslinking degree is determined by dipping the crosslinked structure-containing polyolefin porous support in xylene solution at 135°C, boiling it therein for 12 hours and measuring the residual weight, according to ASTM D2765, and is calculated as a percentage of the residual weight based on the initial weight.

According to an embodiment of the present disclosure, the crosslinked structure-containing polyolefin porous support may have a number of double bonds present in the polyolefin chains of 0.01-0.6 or 0.02-0.5 per 1000 carbon atoms, as determined by $^1$H-NMR. When the crosslinked structure-containing polyolefin porous support has the above-defined number of double bonds, it is possible to minimize the problem of degradation of battery performance at high temperature and/or high voltage.

According to an embodiment of the present disclosure, the number of double bonds present in the polyolefin chains, except the ends, of the crosslinked structure-containing polyolefin porous support may be 0.005-0.59 per 1000 carbon atoms. Herein, 'double bonds present in the polyolefin chains, except the ends' refers to double bonds present throughout the polyolefin chains, except the ends of the polyolefin chains. In addition, the term 'end' refers to the position of carbon atom linked to each of the both terminals of the polyolefin chains.

According to an embodiment of the present disclosure, the crosslinked structure-containing polyolefin porous support may have a thickness of 3-16 μm, or 5-12 μm. When the crosslinked structure-containing polyolefin porous support has the above-defined range of thickness, it is possible to ensure energy density, while preventing the separator from being damaged easily during the use of a battery.

Referring to FIG. 1, the crosslinked structure-containing separator 1 for a lithium secondary battery according to an embodiment of the present disclosure includes an inorganic composite porous layer 20 disposed on at least one surface of the crosslinked structure-containing polyolefin porous support 10. Particularly, the inorganic composite porous layer 20 may be formed on one surface or both surfaces of the crosslinked structure-containing polyolefin porous support 10. The inorganic composite porous layer 20 includes an inorganic filler and a first binder polymer.

The inorganic composite porous layer 20 includes an inorganic filler, and a first binder polymer which attaches the inorganic filler particles to one another so that they may retain their binding states (i.e. the first binder polymer interconnects and fixes the inorganic filler particles), and the inorganic filler may be bound to the crosslinked structure-containing polyolefin porous support 10 by the first binder polymer. The inorganic composite porous layer 20 prevents the crosslinked structure-containing polyolefin porous support 10 from undergoing a severe heat shrinking behavior at high temperature by virtue of the inorganic filler to improve the safety of the separator. For example, the separator may show a heat shrinkage of 20% or less, 2-15%, 2-10%, or 2-5% in each of the machine direction and the transverse direction, as determined after allowing the separator to stand at 150°C for 30 minutes.

As used herein, 'machine direction' refers to the direction of progress during the continuous production of a separator, i.e. the longitudinal direction of the separator, while 'transverse direction' refers to the transverse direction to the machine direction, i.e. the direction perpendicular to the direction of progress during the continuous production of a separator, i.e. the direction perpendicular to the longitudinal direction of the separator.

There is no particular limitation in the inorganic filler, as long as it is electrochemically stable. In other words, there is no particular limitation in the inorganic filler, as long as it causes no oxidation and/or reduction in the range (e.g. 0-5 V based on Li/Li$^+$) of operating voltage of an applicable electrochemical device. Particularly, when using an inorganic filler having a high dielectric constant, it is possible to improve the ion conductivity of an electrolyte by increasing the dissociation degree of an electrolyte salt, such as a lithium salt, in a liquid electrolyte.

For the above-mentioned reasons, according to an embodiment of the present disclosure, the inorganic filler may be an inorganic filler having a dielectric constant of 5 or more, or 10 or more. Non-limiting examples of the inorganic filler having a dielectric constant of 5 or more may include any one selected from the group consisting of $BaTiO_3$, $Pb(Zr,Ti)O_3$ (PZT), $Pb_{1-x}La_xZr_{1-y}Ti_yO_3$ (PLZT, wherein 0 < x < 1, 0 < y < 1), $Pb(Mg_{1/3}Nb_{2/3})O_3$-$PbTiO_3$ (PMN-PT), hafnia ($HfO_2$), $SrTiO_3$, $SnO_2$, $CeO_2$, MgO, $Mg(OH_2)$, NiO, CaO, ZnO, $ZrO_2$, $SiO_2$, $Y_2O_3$, $Al_2O_3$, AlOOH, $Al(OH)_3$, SiC, $TiO_2$, or a mixture thereof.

According to another embodiment of the present disclosure, the inorganic filler may be an inorganic filler having lithium ion transportability, i.e. inorganic filler containing lithium elements and capable of transporting lithium ions, while not storing lithium. Non-limiting examples of the inorganic filler having lithium ion transportability include lithium phosphate ($Li_3PO_4$), lithium titanium phosphate ($Li_xTi_y(PO_4)_3$, 0 < x < 2, 0 < y < 3), lithium aluminum titanium phosphate ($Li_xAl_yTi_z(PO_4)_3$, 0 < x < 2, 0 < y < 1, 0 < z < 3), (LiAlTiP)$_x$O$_y$-based glass (1 < x < 4, 0 < y < 13), such as $14Li_2O$-$9Al_2O_3$-$38TiO_2$-$39P_2O_5$, lithium lanthanum titanate ($Li_xLa_yTiO_3$, 0 < x < 2, 0 < y < 3), lithium germanium thiophosphate ($Li_xGe_yP_zS_w$, 0 < x < 4, 0 < y < 1, 0 < z < 1, 0 < w < 5), such as $Li_{3.25}Ge_{0.25}P_{0.75}S_4$, lithium nitride ($Li_xN_y$, 0 < x < 4, 0 < y < 2), such as $Li_3N$, $SiS_2$-based glass ($Li_xSi_yS_z$, 0 < x < 3, 0 < y < 2, 0 < z < 4), such as $Li_3PO_4$-$Li_2S$-$SiS_2$, and $P_2S_5$-based glass ($Li_xP_yS_z$, 0 < x < 3, 0 < y < 3, 0 < z < 7), such as LiI$Li_2S$-$P_2S_5$, or a mixture thereof.

According to an embodiment of the present disclosure, the inorganic filler may have an average particle diameter of 0.01-1.5 $\mu$m. When the inorganic filler has the above-defined range of average particle diameter, it is possible to form an inorganic composite porous layer 20 having a uniform thickness and suitable porosity and to provide high dispersibility of inorganic filler and desired energy density.

Herein, the average particle diameter of the inorganic filler means $D_{50}$ particle diameter, and "$D_{50}$" means the particle diameter at the point of 50% in the particle number accumulated distribution as a function of particle diameter. The particle diameter may be determined by using the laser diffraction method. Particularly, a powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, $D_{50}$ may be determined by calculating the particle diameter at the point of 50% in the particle number accumulated distribution depending on particle diameter in the analyzer system.

The first binder polymer may have a glass transition temperature ($T_g$) of -200 to 200°C. When the first binder polymer satisfies the above-defined range of glass transition temperature, it can provide the finished inorganic composite porous layer 20 with improved mechanical properties, such as flexibility and elasticity. The first binder polymer may have ion conductivity. When the first binder polymer has ion conductivity, it is possible to further improve the performance of a battery. The first binder polymer may have a dielectric constant ranging from 1.0 to 100 (measured at a frequency of 1 kHz), or from 10 to 100. When the first binder polymer has the above-defined range of dielectric constant, it is possible to improve the salt dissociation degree in an electrolyte.

According to an embodiment of the present disclosure, the first binder polymer may be a binder polymer having excellent heat resistance. When the first binder polymer has excellent heat resistance, the inorganic composite porous layer may have further improved heat resistance. For example, the separator may show a heat shrinkage of 20% or less, 2-15%, 2-10%, 2-5%, 0-5%, or 0-2% in each of the machine direction and the transverse direction, as determined after allowing the separator to stand at 150°C for 30 minutes.

According to an embodiment of the present disclosure, the first binder polymer may include acrylic polymer, polyacrylic acid, styrene butadiene rubber, polyvinyl alcohol, or two or more of them.

Particularly, the acrylic polymer may include acrylic homopolymer prepared by polymerizing acrylic monomers alone, or copolymers of acrylic monomers with another monomers. For example, the acrylic polymer may include copolymer of ethylhexyl acrylate with methyl methacrylate, polymethyl methacrylate, polyethylhexyl acrylate, polybutyl acrylate, polyacrylonitrile, copolymer of butyl acrylate with methyl methacrylate, or two or more of them.

According to an embodiment of the present disclosure, the first binder polymer may be a particle-shaped binder polymer.

According to an embodiment of the present disclosure, the weight ratio of the inorganic filler to the first binder polymer may be 95:5-99.9:0.1, 96:4-99.5:0.5, or 97:3-99: 1. When the weight ratio of the inorganic filler to the first binder polymer falls within the above-defined range, a large amount of inorganic filler is distributed per unit area of the separator to provide the separator with improved thermal safety. For example, the separator may show a heat shrinkage of 20% or less, 2-15%, 2-10%, 2-5%, 0-5%, or 0-2% in each of the machine direction and the transverse direction, as determined after allowing the separator to stand at 150°C for 30 minutes. In addition, it is possible to sufficiently ensure vacant spaces formed among the inorganic filler particles, while ensuring sufficient adhesion among the inorganic filler particles.

According to an embodiment of the present disclosure, the inorganic composite porous layer 20 may further include additives, such as a dispersant and/or a thickener. According to an embodiment of the present disclosure, the additives may include polyvinyl pyrrolidone (PVP), hydroxyethyl cellulose (HEC), hydroxypropyl cellulose (HPC), ethylhydroxyethyl cellulose (EHEC), methyl cellulose (MC), carboxymethyl cellulose (CMC), hydroxyalkylmethyl cellulose, cyanoethylene polyvinyl alcohol, or two or more of them.

According to an embodiment of the present disclosure, the inorganic composite porous layer 20 may have a structure in which the inorganic filler particles are bound to one another by the first binder polymer, while they are packed in contact with one another, and thus interstitial volumes are formed among the inorganic filler particles, and the interstitial volumes become vacant spaces to form pores.

According to an embodiment of the present disclosure, the inorganic composite porous layer 20 may have an average pore size of 0.001-10 $\mu$m. The average pore size of the inorganic composite porous layer may be determined by using the capillary flow porometry. The capillary flow porometry measures the diameter of the smallest pore in the thickness direction. Therefore, in order to determine the average pore size of the inorganic composite porous layer 20 alone by the capillary flow porometry, it is required to separate the inorganic composite porous layer 20 from the crosslinked structure-containing polyolefin porous support 10, and to surround the separated inorganic composite porous layer 20 with a non-woven web capable of supporting the same. Herein, the non-woven web should have a significantly larger pore size as compare to the pore size of the inorganic composite porous layer 20.

According to an embodiment of the present disclosure, the inorganic composite porous layer 20 may have a porosity of 5-95%, 10-95%, 20-90%, or 30-80%. The porosity corresponds to a value obtained by subtracting the volume expressed from the weight and density of each ingredient in the inorganic composite porous layer 20, from the volume calculated from the thickness, width and length of the inorganic composite porous layer 20.

The porosity of the inorganic composite porous layer 20 may be determined from scanning electron microscopic (SEM) images, by using a mercury porosimeter, or through the BET 6-point method based on nitrogen gas adsorption flow using a porosimetry analyzer (e.g. Belsorp-II mini, Bell Japan Inc.).

According to an embodiment of the present disclosure, the inorganic composite porous layer 20 may have a thickness of 1.5-5.0 $\mu$m on one surface of the crosslinked structure-containing polyolefin porous support 10. When the thickness of the inorganic composite porous layer 20 satisfies the above-defined range, it is possible to provide high adhesion to an electrode and increased cell strength of a battery.

Referring to FIG. 1, the crosslinked structure-containing separator 1 for a lithium secondary battery includes a porous adhesive layer 30 on the inorganic composite porous layer 20. The porous adhesive layer 30 includes a second binder polymer.

When the crosslinked structure-containing separator 1 for a lithium secondary battery includes the inorganic composite porous layer 20, it is possible to ensure thermal safety at high temperature by virtue of the inorganic filler, but the separator may show slightly poor adhesion to an electrode. Particularly, when the weight ratio of the inorganic filler to the first binder polymer is 95:5-99.9:0.1 according to an embodiment of the present disclosure, it is possible to further improve thermal safety at high temperature due to such a high content of inorganic filler, but the content of the first binder polymer is reduced to cause a problem in terms of the adhesion between the separator 1 and an electrode.

The porous adhesive layer 30 includes a second binder polymer so that the separator 1 including the inorganic composite porous layer 20 may ensure adhesion to an electrode. In addition, the porous adhesive layer 30 have pores formed therein to prevent an increase in resistance of the separator.

According to an embodiment of the present disclosure, the second binder polymer in the porous adhesive layer 30 cannot infiltrate to the surface and/or inner part of the crosslinked structure-containing polyolefin porous support 10 to minimize an increase in resistance of the separator.

The second binder polymer may be a binder polymer used conventionally for forming an adhesive layer. The second binder polymer may have a glass transition temperature ($T_g$) of -200 to 200°C. When the second binder polymer satisfies the above-defined range of glass transition temperature, it can provide the finished adhesive layer with improved mechanical properties, such as flexibility and elasticity. The second binder polymer may have ion conductivity. When the second binder polymer has ion conductivity, it is possible to further improve the performance of a battery. The second binder polymer may have a dielectric constant ranging from 1.0 to 100 (measured at a frequency of 1 kHz), or from 10 to 100. When the second binder polymer has the above-defined range of dielectric constant, it is possible to improve the salt dissociation degree in an electrolyte.

According to an embodiment of the present disclosure, the second binder polymer may include poly(vinylidene fluoride), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(methyl methacrylate), poly(ethylhexyl acrylate), poly(butyl acrylate), poly(acrylonitrile), poly(vinyl pyrrolidone), poly(vinyl acetate), poly(ethylhexyl acrylate-co-methyl methacrylate), poly(ethylene-co-vinyl acetate), polyethylene oxide, poly(arylate), or two or more of them.

According to an embodiment of the present disclosure, the porous adhesive layer 30 may have a pattern including at least one adhesive region containing the second binder polymer, and at least one non-coated region where no adhesive region is formed. The pattern may have a dot-like, stripe-like, diagonal, waved, triangular, quadrangular or semicircular shape. When the porous adhesive layer 30 has such a pattern, the separator is improved in terms of resistance, and the non-coated region having no porous adhesive layer 30 allows wetting with an electrolyte to provide the separator with improved electrolyte wettability.

According to an embodiment of the present disclosure, the porous adhesive layer 30 may have a thickness of 0.5-1.5 $\mu$m, 0.6-1.2 $\mu$m, or 0.6-1.0 $\mu$m. When the thickness of the porous adhesive layer falls within the above-defined range, it is possible to provide excellent adhesion to an electrode, resulting in an increase in cell strength of a battery. In addition, such a thickness is favorable in terms of the cycle characteristics and resistance characteristics of a battery.

Since the crosslinked structure-containing separator for a lithium secondary battery according to an embodiment of the present disclosure includes the crosslinked structure-containing polyolefin porous support having a crosslinked structure including polymer chains interconnected directly with one another, it shows excellent high-temperature safety. For example, the crosslinked structure-containing separator for a lithium secondary battery may have an increased meltdown temperature as compared to the conventional separator for a lithium secondary battery before crosslinking. For example, the separator may have a meltdown temperature of 160°C or higher, 170°C or higher, or 180-230°C.

As used herein, the term 'separator for a lithium secondary battery before crosslinking' refers to a separator including a non-crosslinked and crosslinked structure-free polyolefin porous support, an inorganic composite porous layer disposed on at least one surface of the crosslinked structure-free polyolefin porous support and containing an inorganic filler and a binder polymer, and a porous adhesive layer disposed on the inorganic composite porous layer and containing a second binder polymer.

The meltdown temperature may be determined through thermomechanical analysis (TMA). For example, a sample is taken in each of the machine direction and the transverse direction, and then the sample having a size of width 4.8 mm x length 8 mm is introduced to a TMA instrument (Q400, available from TA Instrument). Then, while a tension of 0.01 N is applied to the sample, the sample is heated to a temperature from 30°C to 220°C at a heating rate of 5°C/min, and the temperature where the sample undergoes a rapid increase in length or the sample is broken may be determined as the meltdown temperature.

The crosslinked structure-containing separator for a lithium secondary battery according to an embodiment of the present disclosure shows a smaller increase in shutdown temperature, as compared to the separator including a non-crosslinked porous polyolefin support, and also provides a small change in shutdown temperature. The crosslinked structure-containing separator for a lithium secondary battery according to an embodiment of the present disclosure undergoes an increase in meltdown temperature, as compared to the separator including a separator before crosslinking, but shows an insignificant increase in shutdown temperature, and thus can ensure overcharge safety derived from the shutdown temperature, while providing the separator with significantly enhanced high-temperature safety.

According to an embodiment of the present disclosure, the crosslinked structure-containing separator for a lithium secondary battery may have a shutdown temperature of 145°C or lower, 140°C or lower, or 133-140°C. When the crosslinked structure-containing separator for a lithium secondary battery has the above-defined range of shutdown temperature, it is possible to ensure overcharge safety and to prevent the problem of an increase in resistance, caused by damages upon the pores of the crosslinked structure-containing polyolefin porous support during high-temperature pressurization processes in the assemblage of a battery.

The shutdown temperature may be determined by measuring the time (sec) required for 100 mL of air to pass through a separator under a constant pressure of 0.05 MPa, when the separator is heated at a rate of 5°C/min, by using an air permeability tester, and determining a temperature where the separator undergoes a rapid increase in air permeability.

Since the crosslinked structure-containing separator for a lithium secondary battery according to an embodiment of the present disclosure includes an inorganic composite porous layer containing an inorganic filler, it shows excellent thermal safety at high temperature. For example, the crosslinked structure-containing separator for a lithium secondary battery according to an embodiment of the present disclosure may show a heat shrinkage of 20% or less, 2-15%, or 2-10%, in each of the machine direction and the transverse direction, as determined after allowing the separator to stand at 150°C for 30 minutes. In addition, since the crosslinked structure-containing separator for a lithium secondary battery according to an embodiment of the present disclosure includes a porous adhesive layer, it shows excellent adhesion to an electrode.

Since the crosslinked structure-containing separator for a lithium secondary battery according to an embodiment of the present disclosure includes a crosslinked structure-containing polyolefin porous support having a crosslinked structure including polymer chains interconnected directly with one another, the polyolefin porous support can retain substantially the same pore structure as the polyolefin porous support before crosslinking, even after crosslinking.

The crosslinked structure-containing separator for a lithium secondary battery according to an embodiment of the present disclosure may not undergo significant degradation of air permeability, weight per unit area, tensile strength, tensile elongation, puncture strength, electrical resistance, or the like, as compared to the air permeability, weight per unit area, tensile strength, tensile elongation, puncture strength, electrical resistance, or the like, of the separator for a lithium secondary battery before crosslinking, and also shows a small change in those properties.

The crosslinked structure-containing separator for a lithium secondary battery according to an embodiment of the present disclosure may show a change in air permeability of 10% or less, 0-10%, 0-5%, or 0-3%, as compared to the separator for a lithium secondary battery before crosslinking.

The change in air permeability may be calculated according to the following formula:

$$\text{Change (\%) in air permeability} = [(\text{Air permeability of crosslinked structure-containing separator for lithium secondary battery after crosslinking}) - (\text{Air permeability of separator for lithium secondary battery before crosslinking})] / (\text{Air permeability of separator for lithium secondary battery before crosslinking}) \times 100$$

As used herein, the term 'crosslinked structure-containing separator for a lithium secondary battery after crosslinking' refers to a separator including a crosslinked structure-containing polyolefin porous support, an inorganic composite porous layer disposed on at least one surface of the crosslinked structure-containing polyolefin porous support and containing an inorganic filler and a binder polymer, and a porous adhesive layer disposed on the top surface of the inorganic composite porous layer and containing a second binder polymer.

The air permeability (Gurley) may be determined according to ASTM D726-94. Herein, Gurley refers to resistance against air flow and is determined by a Gurley densometer. The air permeability value described herein is expressed by the time (seconds), i.e. air permeation time, required for 100 cc or air to pass through a section of porous support sample having an area of 1 in$^2$ under a pressure of 12.2 in H$_2$O.

The crosslinked structure-containing separator for a lithium secondary battery according to an embodiment of the present disclosure may show a change in weight per unit area of 5% or less, or 0-5%, as compared to the separator for a lithium secondary battery before crosslinking.

The change in weight per unit area may be calculated according to the following formula:

$$\text{Change (\%) in weight per unit area} = [(\text{Weight per unit area of crosslinked structure-containing separator for lithium secondary battery after crosslinking}) - (\text{Weight per unit area of separator for lithium secondary battery before crosslinking})] / (\text{Weight per unit area of separator for lithium secondary battery before crosslinking}) \times 100$$

The weight per unit area (g/m$^2$) is determined by preparing a sample having a width of 1 m and a length of 1 m and measuring the weight of the sample.

The crosslinked structure-containing separator for a lithium secondary battery according to an embodiment of the present disclosure shows a change in tensile strength of 20% or less, 0-20%, 0-10%, 0-9%, 0-8%, or 0-7.53%, in each of the machine direction and the transverse direction, as compared to the separator a lithium secondary battery before crosslinking.

The change in tensile strength may be calculated according to the following formula:

$$\text{Change (\%) in tensile strength in machine direction} = [(\text{Tensile strength in machine direction of separator for lithium secondary battery before crosslinking}) - (\text{Tensile strength in machine direction of crosslinked structure-containing separator for lithium secondary battery after crosslinking})] / (\text{Tensile strength in machine direction of separator for lithium secondary battery before crosslinking}) \times 100$$

$$\text{Change (\%) in tensile strength in transverse direction} = [(\text{Tensile strength in transverse direction of separator for lithium secondary battery before crosslinking}) - (\text{Tensile strength in transverse direction of crosslinked structure-containing separator for lithium secondary battery after crosslinking})] / (\text{Tensile strength in transverse direction of separator for lithium secondary battery before crosslinking}) \times 100$$

The tensile strength refers to the strength of a specimen at the point of breaking, when the specimen is drawn in each of the machine direction and the transverse direction at a rate of 50 mm/min by using Universal Testing Systems (Instron® 3345) according to ASTM D882.

The crosslinked structure-containing separator for a lithium secondary battery according to an embodiment of the present disclosure may show a change in tensile elongation of 20% or less, or 0-20% in each of the machine direction and the transverse direction, as compared to the separator for a lithium secondary battery before crosslinking.

The change in tensile elongation may be calculated according to the following formula:

Change (%) in tensile elongation in machine direction = [(Tensile elongation in machine direction of separator for lithium secondary battery before crosslinking) - (Tensile elongation in machine direction of crosslinked structure-containing separator for lithium secondary battery after crosslinking)] / (Tensile elongation in machine direction of separator for lithium secondary battery before crosslinking) X 100

Change (%) in tensile elongation in transverse direction = [(Tensile elongation in transverse direction of separator for lithium secondary battery before crosslinking) - (Tensile elongation in transverse direction of crosslinked structure-containing separator for lithium secondary battery after crosslinking)] / (Tensile elongation in transverse direction of separator for lithium secondary battery before crosslinking) X 100

The tensile elongation can be calculated according to the following formula, after the specimen is drawn in each of the machine direction and the transverse direction at a rate of 50 mm/min by using Universal Testing Systems (Instron® 3345) according to ASTM D882, and the maximum length of the specimen elongated until the specimen is broken is measured.

Tensile elongation (%) in machine direction = (Length of specimen in machine direction right before breaking – Length of specimen in machine direction before elongation) / (Length of specimen in machine direction before elongation) X 100

Tensile elongation (%) in transverse direction = (Length of specimen in transverse direction right before breaking – Length of specimen in transverse direction before elongation) / (Length of specimen in transverse direction before elongation) X 100

The crosslinked structure-containing separator for a lithium secondary battery according to an embodiment of the present disclosure may show a change in puncture strength of 10% or less, 0.5-10%, 1-9%, or 1.18-8.71%, as compared to the separator a lithium secondary battery before crosslinking.

Herein, the change in puncture strength may be calculated according to the following formula.

$$\text{Change (\%) in puncture strength} = [(\text{Puncture strength of separator for lithium secondary battery before crosslinking}) - (\text{Puncture strength of crosslinked structure-containing separator for lithium secondary battery after crosslinking}) / (\text{Puncture strength of separator for lithium secondary battery before crosslinking}) \times 100$$

According to an embodiment of the present disclosure, the puncture strength may be determined according to ASTM D2582. Particularly, after setting a round tip with a diameter of 1 mm to operate at a rate of 120 mm/min, the puncture strength may be determined according to ASTM D2582.

The crosslinked structure-containing separator for a lithium secondary battery according to an embodiment of the present disclosure may show a change in electrical resistance of 15% or less, 2-10%, or 2-5%, as compared to the separator a lithium secondary battery before crosslinking.

Herein, the change in electrical resistance may be calculated according to the following formula.

$$\text{Change (\%) in electrical resistance} = [(\text{Electrical resistance of crosslinked structure-containing separator for lithium secondary battery after crosslinking}) - (\text{Electrical resistance of separator for lithium secondary battery before crosslinking}) / (\text{Electrical resistance of separator for lithium secondary battery before crosslinking}) \times 100$$

The electrical resistance may be determined by allowing a coin cell manufactured by using a separator sample to stand at room temperature for 1 day and measuring the resistance of the separator through impedance analysis.

The crosslinked structure-containing separator for lithium secondary battery according to the present disclosure may be obtained by the following method, but is not limited thereto.

In another aspect of the present disclosure, there is provided a method for manufacturing a crosslinked structure-containing separator for a lithium secondary battery, including the steps of:

(S1) preparing a slurry for forming an inorganic composite porous layer including an inorganic filler, a first binder polymer and a dispersion medium;
(S2) coating the slurry for forming an inorganic composite porous layer on at least one surface of a polyolefin porous support, followed by drying, to form an inorganic composite porous layer;
(S3) applying a coating solution for forming a porous adhesive layer including a second binder polymer, a solvent for the second binder polymer and a photoinitiator to the top surface of the inorganic composite porous layer;
(S4) dipping the resultant product of step (S3) in a solidifying solution containing a non-solvent for the second binder polymer, followed by drying, to form a porous adhesive layer; and
(S5) irradiating ultraviolet rays to the resultant product of step (S4).

Hereinafter, the method for manufacturing a crosslinked structure-containing separator for a lithium secondary battery according to an embodiment of the present disclosure will be explained with reference to the main parts thereof.

The photoinitiator performs direct photo-crosslinking of the polymer chains in the polyolefin porous support. The photoinitiator alone may perform the crosslinking of the polyolefin porous support with no aid of another crosslinking agent, co-initiator or a synergist. The photoinitiator is converted into a reactive compound, while hydrogen atoms are removed through hydrogen abstraction merely by light absorption. Then, the photoinitiator forms radicals in the polymer chains in the polyolefin porous support, and makes the polymer chains reactive, thereby allowing the polymer chains to be interconnected directly with one another to perform photo-crosslinking. For example, hydrogen may be abstracted by the photoinitiator from a small amount of double bond structures or branch structures present in the polyolefin, and thus hydrogen atoms may be removed from the polyolefin chains through hydrogen abstraction merely based on light absorption, thereby forming radicals.

Since the method for manufacturing a crosslinked structure-containing separator for a lithium secondary battery according to an embodiment of the present disclosure uses the photoinitiator to generate radicals in the polymer chains in the polyolefin porous support, thereby forming a crosslinked structure in which the polymer chains are interconnected directly with one another.

First, in the method for manufacturing a separator for a lithium secondary battery according to an embodiment of the present disclosure, prepared is a slurry for forming an inorganic composite porous layer including an inorganic filler, a first binder polymer and a dispersion medium (S1).

Reference will be made to the above description about the inorganic filler.

The dispersion medium may function as a solvent capable of dissolving the first binder polymer, or as a dispersion medium not capable of dissolving the first binder polymer but capable of dispersing the first binder polymer, depending on the type of the first binder polymer. The dispersion medium may have a solubility parameter similar to the solubility of the first binder polymer to be used and a low boiling point. This is because such a dispersion medium allows homogeneous mixing and may be removed with ease subsequently.

According to an embodiment of the present disclosure, the dispersion medium may be an aqueous dispersion medium. When the dispersion medium is an aqueous dispersion medium, it is eco-friendly, does not require an excessive heat quantity for forming and drying an inorganic composite porous layer, and does not need an additional explosion-preventing system, and thus can form an inorganic composite porous layer more easily.

Reference will be made to the above description about the first binder polymer.

According to an embodiment of the present disclosure, the first binder polymer may not be dissolved in the solvent for the second binder polymer and the non-solvent for the second binder polymer as described hereinafter. In this case, even when the coating solution as mentioned hereinafter is applied to form a porous adhesive layer after forming the inorganic composite layer, the first binder is not dissolved, and thus it is possible to easily prevent the first binder polymer dissolved in the solvent for the second binder polymer or the non-solvent for the second binder polymer from blocking the pores.

According to an embodiment of the present disclosure, the first binder polymer may be an aqueous binder polymer. Herein, the first binder polymer may be dissolved in an aqueous solvent or may be dispersed by the aqueous dispersion medium. When the first binder polymer is dispersed by the aqueous dispersion medium, the first binder polymer may be a particle-shaped binder polymer.

The slurry for forming an inorganic composite porous layer may be prepared by dissolving or dispersing the first binder polymer in the solvent, adding the inorganic filler thereto and dispersing it therein. The inorganic filler may be added after it is pulverized in advance to a predetermined average particle diameter. Otherwise, the inorganic filler may be added to the slurry containing the binder polymer dissolved or dispersed therein, and then pulverized and dispersed, while controlling it to have a predetermined average particle diameter by using a ball milling process, or the like. Herein, the pulverization may be carried out for 1-20 hours, and the pulverized inorganic filler may have an average particle diameter within the above-defined range. The inorganic filler may be pulverized by using a conventional method, such as ball milling.

According to an embodiment of the present disclosure, the slurry for forming an inorganic composite porous layer may further include additives, such as a dispersant and/or a thickener. According to an embodiment of the present disclosure, the additives may include polyvinyl pyrrolidone (PVP), hydroxyethyl cellulose (HEC), hydroxypropyl cellulose (HPC), ethylhydroxyethyl cellulose (EHEC), methyl cellulose (MC), carboxymethyl cellulose (CMC), hydroxyalkylmethyl cellulose, cyanoethylene polyvinyl alcohol, or two or more of them.

According to an embodiment of the present disclosure, the slurry for forming an inorganic composite porous layer may have a solid content of 5-60 wt%, or 30-50 wt%. When the inorganic composite porous layer has the above-defined range of solid content, it is possible to ensure coating uniformity with ease, and to prevent generation of nonuniformity, caused by flowing of the slurry, or to prevent consumption of a lot of energy for drying the slurry.

Next, the slurry for forming an inorganic composite porous layer is coated on at least one surface of a polyolefin porous support, followed by drying, to form an inorganic composite porous layer (S2).

The polyolefin porous support may be obtained from the above-described polyolefin materials by forming pores through a conventional process known to those skilled in the art as a process for ensuring high air permeability and porosity, for example, through a wet process using a solvent, a diluent or a pore forming agent, or a dry process using orientation.

According to an embodiment of the present disclosure, the polyolefin porous support may have a number of double bonds present in the polyolefin chains of 0.01-0.5, or 0.01-0.3 per 1000 carbon atoms, as determined by $^{1}$H-NMR. When the polyolefin porous support has the above-defined number of double bonds, it is possible to carry out effective crosslinking of the polyolefin porous support, while minimizing side-reactions caused by excessive formation of radicals. For example, it is possible to prevent side reactions by allowing crosslinking merely between the polymer chains, while avoiding crosslinking between photoinitiator molecules or between a photoinitiator and polymer chains.

In addition, it is possible to prevent excessive formation of radicals and rapid crosslinking, and thus to prevent the separator from shrinking. In this manner, it is possible to prevent a decrease in air permeability of the polyolefin porous support after crosslinking.

It is also possible to prevent degradation of the mechanical strength of the polyolefin porous support, caused by excessive main chain scission of polyolefin.

Since crosslinking between polyolefin chains may occur throughout the polyolefin chains except the ends, the number of double bond structures present in the polyolefin chains except the ends may affect the crosslinking of the polyolefin porous support. According to an embodiment of the present disclosure, the number of double bonds present in the polyolefin chains, except the ends, of the crosslinked structure-containing polyolefin porous support may be 0.005-0.49 per 1000 carbon atoms. Herein, reference will be made to the above description about 'double bonds present in the polyolefin chains, except the ends.'

According to an embodiment of the present disclosure, the number of double bonds present in the polyolefin chains may be controlled by modifying the type of a catalyst used for synthesizing polyolefin, purity, addition of a linker, or the like.

According to an embodiment of the present disclosure, the polyolefin porous support may have a BET specific surface area of 10-27 m$^2$/g, 13-25 m$^2$/g, or 15-23 m$^2$/g. When the polyolefin porous support satisfies the above range of BET specific surface area, the polyolefin porous support has an increased surface area, and thus shows increased crosslinking efficiency, even when using a small amount of photoinitiator.

The BET specific surface area of the polyolefin porous support may be determined by the BET method. Particularly, the BET specific surface area of the polyolefin porous support may be calculated from the nitrogen gas adsorption at the temperature (77K) of liquid nitrogen by using Belsorp-II mini available from Bell Japan Inc.

According to an embodiment of the present disclosure, the polyolefin porous support may further include an antioxidant. The antioxidant can control the radicals formed in the polyolefin chains, thereby controlling crosslinking between the polymer chains. The antioxidant may be oxidized instead of the polymer chains to prevent oxidation of the polyolefin chains, or may absorb radicals to control crosslinking between the polymer chains. In this manner, the antioxidant may affect the shutdown temperature and mechanical strength of the finished separator.

According to an embodiment of the present disclosure, the content of the antioxidant may be 500-20000 ppm, 1000-15000 ppm, or 2000-13000 ppm, based on the weight of the polyolefin porous support. When the content of the antioxidant satisfies the above-defined range, the antioxidant can sufficiently control excessive formation of radicals, and thus can prevent the problem of side reactions, while preventing the polyolefin porous support from surface roughening.

Such antioxidants may be classified into radical scavengers which react with the radicals formed in polyolefin to stabilize polyolefin, and peroxide decomposers which decompose the peroxide produced by the radicals into a stable form of molecule. The radical scavenger releases hydrogen, stabilizes radicals, and is converted into radicals in itself. However, the radical scavenger may remain in a stable form through the resonance effect or electron rearrangement. The peroxide decomposer may realize an enhanced effect, when being used in combination with the radical scavenger.

According to an embodiment of the present disclosure, the antioxidant may include a first antioxidant as a radical scavenger and a second antioxidant as a peroxide decomposer. The first antioxidant and the second antioxidant have different acting mechanisms. Therefore, when using the first antioxidant as a radical scavenger and the second antioxidant as a peroxide decomposer at the same time, it is possible to easily inhibit undesired radical formation through the synergic effect of the antioxidants.

The content of the first antioxidant may be the same as or different from the content of the second antioxidant.

According to an embodiment of the present disclosure, the first antioxidant may include a phenolic antioxidant, an amine-based antioxidant, or a mixture thereof.

The phenolic antioxidant may include 2,6-di-t-butyl-4-methylphenol, 4,4'-thiobis(2-t-butyl-5-methylphenol), 2,2'-thiodiethylbis-[3-(3,5-di-t-butyl-4-hydroxyphenyl) propionate], pentaerythritol-tetrakis[3-(3,5-di-t-butyl-4-hydroxyphenyl)propionate], 4,4'-thiobis(2-methyl-6-t-butylphenol), 2,2'-thiobis(6-t-butyl-4-methylphenol), octadecyl-[3-(3,5-di-t-butyl-4-hydroxyphenyl)propionate], triethylene glycol-bis-[3-(3-t-butyl-4-hydroxy-5-methylphenol)propionate], thiodiethylene bis[3-(3,5-di-t-butyl-4-hydroxyphenyl)propionate], 6,6'-di-t-butyl-2,2'-thiodi-p-cresol, 1,3,5-tris(4-t-butyl-3-hydroxy-2,6-xylyl)methyl-1,3,5-triazine-2,4,6-(1H,3H,SH)-trione, dioctadecyl 3,3'-thiodipropionate, or two or more of them.

According to an embodiment of the present disclosure, the content of the first antioxidant may be 500-10000 ppm, 1000-12000 ppm, or 1000-10000 ppm, based on the weight of the polyolefin porous support. When the content of the first antioxidant satisfies the above-defined range, it is possible to easily prevent the problem of side reactions caused by excessive formation of radicals.

According to an embodiment of the present disclosure, the second antioxidant may include a phosphorus-based antioxidant, a sulfur-based antioxidant, or a mixture thereof.

The phosphorus-based antioxidant decomposes peroxide to form alcohol and is converted into phosphate. The phosphorus-based antioxidant may include 3,9-bis(2,6-dit-butyl-4-methylphenoxy)-2,4,8,10-tetraoxa-3,9-diphosphaspiro[5,5]undecane, bis(2,6-dicumylphenyl)pentaerythritol diphosphite, 2,2'-methylene bis(4,6-d-t-butylphenyl) 2-ethylhexyl phosphite, bis(2,4-di-t-butyl-6-methylphenyl)-ethyl-phosphite, bis(2,6-di-t-butyl-4-methylphenyl)pentaerythritol diphosphite, bis(2,4-di-t-butylphenyl)pentaerythritol diphosphite, bis(2,4-dicumylphenyl)pentaerythritol diphosphite, distearyl pentaerythritol diphosphite, tris(2,4-di-t-butylphenyl)phosphite, or two or more of them.

The sulfur-based antioxidant may include 3,3'-thiobis-1,1'-didocecyl ester, dimethyl 3,3'-thiodipropionate, dioctadecyl 3,3'-thiodipripionate, 2,2-bis{[3-(dodecylthio)-1 -oxopropoxy]methyl}propane-1,3-diyl bis[3-(dodecylthio)propionate], or two or more of them.

According to an embodiment of the present disclosure, the content of the second antioxidant may be 500-10000 ppm, 1000-12000 ppm, or 1000-10000 ppm, based on the weight of the polyolefin porous support. When the content of the second antioxidant satisfies the above-defined range, it is possible to easily prevent the problem of side reactions caused by excessive formation of radicals.

According to an embodiment of the present disclosure, when the antioxidant includes a first antioxidant as a radical scavenger and a second antioxidant as a peroxide decomposer at the same time, the content of the first antioxidant may be 500-10000 ppm based on the weight of the polyolefin porous support, and the content of the second antioxidant may be 500-10000 ppm based on the weight of the polyolefin porous support.

Non-limiting examples of the method for coating the polyolefin porous support with the slurry for forming an inorganic composite porous layer include dip coating, die coating, roll coating, comma coating, microgravure coating, doctor blade coating, reverse roll coating, Mayer bar coating, direct roll coating, or the like.

The slurry for forming an inorganic composite porous layer may be dried by a drying method used conventionally for manufacturing a separator. For example, the coated slurry may be dried by using air for 10 seconds to 30 minutes, 30 seconds to 20 minutes, or 3-10 minutes. When the drying time falls within the above-defined range, it is possible to remove the remaining solvent, while not adversely affecting the productivity.

Then, a coating solution for forming a porous adhesive layer including a second binder polymer, a solvent for the second binder polymer and a photoinitiator is applied to the top surface of the inorganic composite porous layer (S3).

Reference will be made to the above description about the second binder polymer.

The solvent for the second binder polymer may be one capable of dissolving the second binder polymer at 5 wt% or more, 15 wt% or more, or 25 wt% or more, at 25°C.

The solvent for the second binder polymer may be a non-solvent for the first binder polymer. For example, the solvent for the second binder polymer may dissolve the first binder polymer at a concentration of less than 5 wt% at 25°C.

According to an embodiment of the present disclosure, the solvent for the second binder polymer may include: a cycloaliphatic hydrocarbon, such as cyclopentane and cyclohexane; aromatic hydrocarbon, such as toluene, xylene and ethylbenzene; ketone, such as acetone, ethyl methyl ketone, diisopropyl ketone, cyclohexanone, methylcyclohexane and ethylcyclohexane; chlorinated aliphatic hydrocarbon, such as methylene chloride, chloroform and tetrachlorocarbon; ester, such as ethyl acetate, butyl acetate, $\gamma$-butyrolactone and $\varepsilon$-caprolactone; acylonitrile, such as acetonitrile and propionitrile; ether, such as tetrahydrofuran and ethylene glycol diethyl ether; alcohol, such as methanol, ethanol, isopropanol, ethylene glycol and ethylene glycol monomethyl ether; amide, such as N-methyl pyrrolidone and N,N-dimethylformamide; or two or more of them.

According to an embodiment of the present disclosure, the second binder polymer may be used in an amount of 3-30 wt%, or 5-25 wt%, based on 100 wt% of the coating solution for forming a porous adhesive layer.

Since the photoinitiator is contained in the coating solution for forming a porous adhesive layer, the photoinitiator can be introduced to the surface of the polyolefin porous support, while forming a porous adhesive layer at the same time, when coating the coating solution for forming a porous adhesive layer on the top surface of the inorganic composite porous layer.

While coating the coating solution for forming a porous adhesive layer, the polyolefin porous support is wetted with the solvent. Herein, the photoinitiator contained in the coating solution for forming a porous adhesive layer is introduced to the polyolefin porous support, and the polyolefin porous support may be photo-crosslinked by the photoinitiator present on the surface of the polyolefin porous support upon the UV irradiation.

In this manner, the method for manufacturing a crosslinked structure-containing separator for a lithium secondary battery according to an embodiment of the present disclosure can simplify the process in that the polyolefin porous support can be photo-crosslinked by using a step of forming a porous adhesive layer, while avoiding a need for a system for directly applying the photoinitiator to the polyolefin porous support in order to photo-crosslink the polyolefin porous support, for example, a system for directly coating and drying a solution containing the photoinitiator on the polyolefin porous support.

The method for manufacturing a crosslinked structure-containing separator for a lithium secondary battery according to an embodiment of the present disclosure does not require any other ingredient, such as a monomer for forming radicals, than the photoinitiator to perform direct crosslinking of the polymer chains in the polyolefin porous support. Thus, even though the photoinitiator is added to the coating solution for forming a porous adhesive layer, there is no ingredient interrupting the photoinitiator from reaching the surface of the polyolefin porous polymer support. As a result, the photoinitiator can be introduced sufficiently to the surface of the polyolefin porous support.

Additionally, in general, the polyolefin porous polymer support itself and the inorganic filler have a high UV-protecting effect. Thus, when UV is irradiated after forming an inorganic composite porous layer and porous adhesive layer, irradiation dose of UV rays arriving at the polyolefin porous support may be reduced. However, according to the present disclosure, crosslinking may be accomplished even with a low UV irradiation dose, and the polymer chains in the polyolefin porous support may be crosslinked directly, even when UV is irradiated after forming the inorganic composite porous layer and porous adhesive layer.

According to an embodiment of the present disclosure, the photoinitiator may include a Type 2 photoinitiator.

According to an embodiment of the present disclosure, the photoinitiator may include thioxanthone (TX), a thioxanthone derivative, benzophenone (BPO), a benzophenone derivative, or a mixture of two or more of them.

According to an embodiment of the present disclosure, the photoinitiator may include 2-isopropyl thioxanthone, thioxanthone or a mixture thereof. Herein, 2-isopropyl thioxanthone or thioxanthone allows photocrosslinking even under a long wavelength having a high transmission. Therefore, even when irradiating UV after forming the inorganic composite porous layer and the porous adhesive layer, it is possible to facilitate crosslinking of the polyolefin porous support.

The content of the photoinitiator present on the surface of the polyolefin porous support may affect crosslinking of the polyolefin porous support. According to an embodiment of the present disclosure, the content of the photoinitiator may be 0.015-0.3 parts by weight, 0.03-0.3 parts by weight, 0.03-0.09 parts by weight, or 0.06-0.07 parts by weight, based on 100 parts by weight of the polyolefin porous support. When the content of the photoinitiator satisfies the above-defined range, it is possible to prevent excessive crosslinking, while the polyolefin porous support is crosslinked. Even when the above-defined content of photoinitiator is coated, it is possible to crosslink the polyolefin porous support by irradiating UV at a light dose capable of ensuring mass productivity (i.e. lower light dose as compared to the related art).

The content of the photoinitiator based on 100 parts by weight of the polyolefin porous support may be determined by measuring the content of the photoinitiator with which the total volume of the polyolefin porous support is filled. For example, assuming the total pore volume of the polyolefin porous support is filled with the solvent for the second binder polymer to 100% and no solvent for the second binder polymer is present on the surface of the polyolefin porous support, the weight of the solvent for the second binder polymer contained in the total pore volume of the polyolefin porous support may be calculated from the density of the solvent for the second binder polymer, and the content of the photoinitiator based on 100 parts by weight of the polyolefin porous support may be calculated from the content of the photoinitiator contained in the solvent for the second binder polymer.

According to an embodiment of the present disclosure, the content of the photoinitiator in the photocrosslinking composition may be 0.015-0.3 parts by weight based on 100 parts by weight of the polyolefin porous support, as well as 0.01-0.5 parts by weight, 0.02-0.45 parts by weight, or 0.25-0.4 parts by weight based on 100 parts by weight of the solvent for the second binder polymer. When the content of the photoinitiator satisfies the above-defined range based on the solvent for the second binder polymer, it is possible to easily prevent generation of side reactions caused by excessive formation of radicals, while allowing crosslinking of the polyolefin porous support.

In addition, according to an embodiment of the present disclosure, the content of the photoinitiator in the photocrosslinking composition may be 0.015-0.3 parts by weight based on 100 parts by weight of the polyolefin porous support, as well as 0.01-1.0 mg/m$^2$, 0.03-0.8 mg/m$^2$, or 0.06-0.7 mg/m$^2$, based on the specific surface area of the polyolefin porous support. When the content of the photoinitiator satisfies the above-defined range, it is possible to easily prevent generation of side reactions caused by excessive formation of radicals, while allowing crosslinking of the polyolefin porous support.

The content of the photoinitiator based on the specific surface area of the polyolefin porous support may be determined through NMR analysis.

Non-limiting examples of the method for applying the coating solution for forming a porous adhesive layer to the top surface of the inorganic composite porous layer include dip coating, die coating, roll coating, comma coating, microgravure coating, doctor blade coating, reverse roll coating, Mayer bar coating, direct roll coating, or the like.

According to an embodiment of the present disclosure, the coating solution for forming a porous adhesive layer may be pattern-coated on the top surface of the inorganic composite porous layer to form a pattern on the finished porous adhesive layer.

Then, the resultant product of step (S3) is dipped in a solidifying solution containing a non-solvent for the second binder polymer, followed by drying, to form a porous adhesive layer (S4). In this manner, the second binder polymer is solidified, while phase separation occurs in the coated slurry for forming an inorganic composite porous layer. After that, the resultant product is washed with water to remove the solidifying solution, followed by drying.

The drying step may be carried out by using a known process, and may be performed in a batchwise or continuous mode by using an oven or a heating chamber in a temperature range considering the vapor pressure of the solvent for the second binder polymer used herein. The drying step is for substantially removing the solvent for the second polymer present in the slurry, and is preferably carried out as rapidly as possible considering productivity, or the like. For example, the drying step may be carried out for 1 minute or less, or 30 seconds or less.

The solidifying solution may include the non-solvent for the second binder polymer alone, or a mixed solvent of the non-solvent for the second binder polymer with the above-mentioned solvent for the second binder polymer. When using a mixed solvent of the non-solvent for the second binder polymer with the solvent for the second binder polymer, the content of the non-solvent for the second binder polymer may be 50 wt% or more based on 100 wt% of the solidifying solution with a view to formation of a high-quality porous structure and improvement of productivity.

While the second binder polymer is solidified, the second binder polymer is condensed. Thus, it is possible to prevent the second binder polymer from infiltrating to the surface and/or inner part of the polyolefin porous support, and to prevent an increase in resistance of the separator. In addition, the adhesive layer including the second binder polymer becomes a porous layer to improve the resistance of the separator.

The non-solvent for the second binder polymer may dissolve the second binder polymer at a concentration of less than 5 wt% at 25°C.

The non-solvent for the second binder polymer may also be a non-solvent for the first binder polymer. For example, the non-solvent for the second binder polymer may dissolve the first binder polymer at a concentration of less than 5 wt% at 25°C.

According to an embodiment of the present disclosure, particular examples of the non-solvent for the second binder polymer include water, methanol, ethanol, propyl alcohol, butyl alcohol, butanediol, ethylene glycol, propylene glycol, tripropylene glycol, or two or more of them.

According to an embodiment of the present disclosure, the dipping time may be 3 seconds to 1 minute. When the dipping time satisfies the above-defined range, phase separation occurs suitably to ensure the adhesion between the inorganic composite porous layer and the porous adhesive layer and to prevent interlayer separation of the adhesive layer with ease.

According to an embodiment of the present disclosure, the coating solution for forming a porous adhesive layer may be dried by a drying method used conventionally for manufacturing a separator. For example, the coated slurry may be dried by using air for 10 seconds to 30 minutes, 30 seconds to 20 minutes, or 3-10 minutes. When the drying time falls within the above-defined range, it is possible to remove the remaining dispersion medium, while not adversely affecting the productivity.

After that, UV rays are irradiated to the resultant product of step (S4), in step (S5).

As UV rays are irradiated, the polymer chains in the polyolefin porous support are crosslinked to provide a crosslinked structure-containing polyolefin porous support.

UV irradiation is carried out by using a UV crosslinking system, while controlling UV irradiation time and irradiation dose adequately considering the content of the photoinitiator, or the like. For example, the UV irradiation time and irradiation dose may be set under such a condition that the polyolefin chains in the polyolefin porous support may be crosslinked sufficiently to ensure a desired level of heat resistance, while preventing the polyolefin porous support from being damaged by the heat generated by the UV lamp. In addition, the UV lamp used for the UV crosslinking system may be selected suitably from a high-temperature mercury lamp, metal lamp, gallium lamp, or the like, depending on the photoinitiator used herein, and the light emission wavelength and dose of the UV lamp may be selected suitably depending on the process.

The method for manufacturing a crosslinked structure-containing separator for a lithium secondary battery according to an embodiment of the present disclosure can perform photo-crosslinking of the polymer chains in the polyolefin porous support even with a significantly smaller UV irradiation light dose as compared to the light dose used for general photo-crosslinking. Therefore, it is possible to increase the applicability of the crosslinked structure-containing separator for a lithium secondary battery to a mass production process. For example, the UV light dose may be 10-2000 $mJ/cm^2$, 50-1000 $mJ/cm^2$, or 150-500 $mJ/cm^2$.

According to an embodiment of the present disclosure, 'UV light dose' may be determined by using a portable light dose measuring instrument called UV power puck available from Miltec. When determining light dose by using H type UV bulb available from Miltec, three types of wavelength values of UVA, UVB and UVC are derived depending on wavelength, and UV rays used herein corresponds to UVA.

According to the present disclosure, the method for determining 'UV light dose' includes passing UV power puck through a conveyer in the presence of a light source under the same condition as a sample, and the UV light dose value displayed in UV power puck is defined as 'UV light dose'.

In the method for manufacturing a crosslinked structure-containing separator for a lithium secondary battery according to an embodiment of the present disclosure, each of the inorganic composite porous layer and the porous adhesive layer is formed through a separate step, and thus the porous adhesive layer may be formed with various shapes. For example, it is easy to form the porous adhesive layer with a patterned shape.

The crosslinked structure-containing separator for a lithium secondary battery as described above may be interposed between a positive electrode and a negative electrode to obtain a lithium secondary battery.

The lithium secondary battery may have various shapes, such as a cylindrical shape, a prismatic shape, a pouch-like shape, or the like.

The lithium secondary battery may include a lithium metal secondary battery, a lithium-ion secondary battery, a lithium polymer secondary battery, a lithium-ion polymer secondary battery, or the like.

The electrodes used in combination with the crosslinked structure-containing separator for a lithium secondary battery according to the present disclosure are not particularly limited, and may be obtained by allowing electrode active materials to be bound to an electrode current collector through a method generally known in the art.

Among the electrode active materials, non-limiting examples of a positive electrode active material include, but are not limited to: layered compounds, such as lithium cobalt oxide ($LiCoO_2$) and lithium nickel oxide ($LiNiO_2$), or those compounds substituted with one or more transition metals; lithium manganese oxides such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); vanadium oxides such as $LiVsOs$, $LiV_3O_4$, $V_2O_5$ or $Cu_2V_2O_7$; Ni-site type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); $LiMn_2O_4$ in which Li is partially substituted with an alkaline earth metal ion; disulfide compounds; $Fe_2(MoO_4)_3$; or the like.

Non-limiting examples of a negative electrode active material include conventional anode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used preferably.

Non-limiting examples of a positive electrode current collector include foil made of aluminum, nickel or a combination thereof. Non-limiting examples of a negative electrode current collector include foil made of copper, gold, nickel, copper alloys or a combination thereof.

According to an embodiment of the present disclosure, the conductive material used in each of the negative electrode and the positive electrode may be added in an amount of 1-30 wt% based on the total weight of the active material layer. The conductive material is not particularly limited, as long as it causes no chemical change in the corresponding battery and has conductivity. Particular examples of the conductive material include: graphite, such as natural graphite or artificial graphite; carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; conductive materials, such as polyphenylene derivatives, or the like.

According to an embodiment of the present disclosure, the binder used in each of the negative electrode and the positive electrode independently is an ingredient which assists binding between an active material and a conductive material and binding to a current collector. In general, the binder may be added in an amount of 1-30 wt% based on the total weight of the active material layer. Particular examples of the binder include polyvinylidene fluoride (PVDF), polyacrylic acid (PAA), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylenepropylene-diene terpolymer (EPDM), sulfonated EPDM, styrene-butadiene rubber, fluoro-rubber, various copolymers, or the like.

According to an embodiment of the present disclosure, the lithium secondary battery includes an electrolyte, which may include an organic solvent and a lithium salt. In addition, the electrolyte may include an organic solid electrolyte or an inorganic solid electrolyte.

Particular examples of the organic solvent include aprotic organic solvents, such as N-methyl-2-pyrrolidone, ethylene carbonate, propylene carbonate, butylene carbonate, dimethyl carbonate, diethyl carbonate, $\gamma$-butyrolactone, 1,2-dimethoxyethane, tetrahydroxy franc, 2-methyl tetrahydrofuran, dimethyl sulfoxide, 1,3-dioxolan, formamide, dimethyl formamide, dioxolan, acetonitrile, nitromethane, methyl formate, methyl acetate, triphosphate, trimethoxymethane, dioxolan derivatives, sulforane, methyl sulforane, 1,3-dimethyl-2-imidazolidione, propylene carbonate derivatives, tetrahydrofuran derivatives, ethers, methyl propionate, ethyl propionate, or the like.

The lithium salt is a material which can be dissolved in the non-aqueous electrolyte with ease, and particular examples thereof include $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithium chloroborate, lithium lower aliphatic carboxylate, lithium tetraphenyl borate, imide, or the like.

In addition, the electrolyte may further include pyridine, triethyl phosphite, triethanolamine, cyclic ethers, ethylene diamine, n-glyme, triamide hexaphosphate, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethaol and aluminum trichloride in order to improve the charge/discharge characteristics, flame resistance, or the like. Optionally, the electrolyte may further include a halogen-containing solvent, such as carbon tetrachloride or trifluoroethylene, in order to impart non-combustibility. The electrolyte may further include carbon dioxide gas in order to improve the high-temperature storage characteristics.

Particular examples of the organic solid electrolyte may include polyethylene derivatives, polyethylene oxide derivatives, polypropylene oxide derivatives, phosphate polymer, polyagitation lysine, polyester sulfide, polyvinyl alcohol, polyvinylidene fluoride, polymers containing an ionically dissociable group, or the like.

Particular examples of the inorganic solid electrolyte may include nitrides, halides and sulfates of Li, such as $Li_3N$, $LiI$, $Li_5NI_2$, $Li_3N-LiI-LiOH$, $LiSiO_4$, $LiSiO_4-LiI-LiOH$, $Li_2SiS_3$, $Li_4SiO_4$, $Li_4SiO_4-LiI-LiOH$ and $Li_3PO_4-Li_2S-SiS_2$.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

According to an embodiment of the present disclosure, the crosslinked structure-containing separator for a secondary battery may be applied to a battery through lamination, stacking and folding of the separator with electrodes, besides a conventional process, winding.

According to an embodiment of the present disclosure, the crosslinked structure-containing separator for a secondary battery may be interposed between the positive electrode and the negative electrode. When an electrode assembly is formed by assembling a plurality of cells or electrodes, the separator may be interposed between the adjacent cells or electrodes. The electrode assembly may have various structures, such as a simple stack type, a j elly-roll type, a stacked-folded type, a laminated-stacked type, or the like.

MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

**Example 1**

As a polyolefin porous support, prepared was a polyethylene porous film (weight average molecular weight: 600,000, porosity: 45%) having a number of double bonds present in the polyolefin chains of 0.2 per 1000 carbon atoms, as determined by $^1$H-NMR, including 3000 ppm of Irganox1010 and 2000 ppm of Irgafos168 as antioxidants, and having a thickness of 6 $\mu$m.

In addition, a mixture containing $Al_2O_3$ powder having a $D_{50}$ particle diameter of 600 nm and $\gamma$-AlOOH powder having a $D_{50}$ particle diameter of 250 nm at a weight ratio of 9:1 was prepared as an inorganic filler. An acrylic emulsion (CSB-130, Toyo Ink Co.) was prepared as the first binder polymer, and sodium carboxymethyl cellulose (CMC-Na) (SG-L02, GL Chem Co.) was prepared as a dispersant.

The inorganic filler, the first binder polymer and the dispersant were added to water at a weight ratio of 97:2:1, and the inorganic filler was pulverized and dispersed to prepare a slurry for forming an inorganic composite porous layer.

The slurry for forming an inorganic composite porous layer was coated on both surfaces of the polyolefin porous support, followed by drying, to form an inorganic composite porous layer.

Poly(vinylidene fluoride-co-hexafluoropropylene (PVDF-HFP) (LBG, Arkema Co.) as the second binder polymer was added to N-methyl-2-pyrrolidone (NMP) as a solvent, and 2-isopropl thioxanthone (Sigma Aldrich Co.) as a photoinitiator was added in an amount of 0.1 parts by weight based on 100 parts by weight of N-methyl-2-pyrrolidone to prepare a coating solution for forming a porous adhesive layer.

The coating solution for forming a porous adhesive layer was coated on the inorganic composite porous layer so that the content of the photoinitiator may be 0.07 parts by weight based on 100 parts by weight of the polyolefin porous support, and the resultant product was dipped in a solidifying solution and a water-washing vessel successively to solidify the coating solution. The solidifying solution and water-washing vessel include water as a non-solvent. After solidifying the coating solution, the solvent and non-solvent remaining in the coating solution were dried at the same time.

Then, a high-pressure mercury lamp (high-pressure mercury lamp available from Lichtzen, LH-250/800-A) was used to irradiate UV rays at an accumulated light dose of 500 mJ/cm$^2$ to carry out crosslinking of the polyolefin porous support, thereby providing a crosslinked structure-containing separator for a lithium secondary battery.

**Comparative Example 1**

As a polyolefin porous support, prepared was a polyethylene porous film (Toray Co., weight average molecular weight: 600,000, porosity: 45%) having a number of double bonds present in the polyolefin chains of 0.2 per 1000 carbon atoms, as determined by $^1$H-NMR, and having a thickness of 6 $\mu$m, and the polyethylene porous film was used as a separator for a lithium separator as it was with no further treatment.

**Comparative Example 2**

A separator was obtained in the same manner as Example 1, except that 2-isopropyl thioxanthone (Sigma Aldrich Co.) as a photoinitiator was not added to the coating solution for forming a porous adhesive layer, and UV rays were not irradiated.

**Test Example 1: Determination of Physical Properties of Separators**

Each of the separators according to Example 1 and Comparative Examples 1 and 2 was determined in terms of air permeability, weight per unit area, tensile strength in each of the machine direction and the transverse direction, tensile elongation in each of the machine direction and the transverse direction, puncture strength, heat shrinkage in each of the machine direction and the transverse direction, as determined after allowing the separator to stand at 150°C for 30 minutes, adhesion to an electrode, electrical resistance, and meltdown temperature. The results are shown in the following Table 1.

(1) Evaluation of Air Permeability

Air permeability (Gurley) was determined according to the method of ASTM D726-94. Gurley used herein refers to the resistance of a separator against air flow and was determined by using Gurley densometer. The air permeability value defined herein is expressed by the time (second), i.e. air permeation time, required for 100 mL of air to pass through the section of 1 in$^2$ of a separator under a pressure of 12.2 in $H_2O$.

(2) Evaluation of Weight per Unit Area

The weight per unit area (g/m$^2$) is determined by preparing a sample having a width of 1 m and a length of 1 m and measuring the weight of the sample.

(3) Tensile Strength in Machine Direction and Transverse Direction

A specimen having a size of 150 mm x 15 mm was prepared.
The tensile strength was defined as the strength of the specimen at the point of breaking, when the specimen was drawn in each of the machine direction and the transverse direction at a rate of 50 mm/min by using Universal Testing Systems (Instron® 3345) according to ASTM D882.

(4) Tensile Elongation in Machine Direction and Transverse Direction

A specimen having a size of 150 mm x 15 mm was prepared.
The tensile elongation was calculated according to the following formula, after the specimen was drawn in each of the machine direction and the transverse direction at a rate of 50 mm/min by using Universal Testing Systems (Instron® 3345) according to ASTM D882, and the maximum length of the specimen elongated until the specimen was broken was measured.

$$\text{Tensile elongation (\%) in machine direction} = (\text{Length of specimen in machine direction right before breaking} - \text{Length of specimen in machine direction before elongation}) / (\text{Length of specimen in machine direction before elongation}) \times 100$$

$$\text{Tensile elongation (\%) in transverse direction} = (\text{Length of specimen in transverse direction right before breaking} - \text{Length of specimen in transverse direction before elongation}) / (\text{Length of specimen in transverse direction before elongation}) \times 100$$

(5) Evaluation of Puncture Strength

A specimen having a size of 50 mm x 50 mm was prepared.
According to ASTM D2582, a round tip having a diameter of 1 mm was allowed to operate at a rate of 120 mm/min, and puncture strength was determined.

(6) Evaluation of Heat Shrinkage at 150°C

The separator was cut into a size of 50 mm (length) x 50 mm (width) to prepare a specimen. The heat shrinkage was calculated according to the following formula by allowing the specimen to stand in an oven heated at 150°C for 30 minutes, recovering the specimen, and measuring a change in length in each of the machine direction and the transverse direction:

$$\text{Heat shrinkage at } 150°C = \{(\text{Dimension before shrinking} - \text{Dimension after shrinking}) / \text{Dimension before shrinking}\} \times 100$$

(7) Adhesion to Electrode

Each of the separators according to Example 1 and Comparative Examples 1 and 2 was cut into a size of 25 mm x 100 mm, and two sheets of separator specimens were prepared for each Example.
The prepared two sheets of separator specimens were overlapped in such a manner that the porous adhesive layers might face each other, and the resultant structure was inserted between PET films having a thickness of 100 $\mu$m and allowed to pass through a roll laminator at 100°C to carry out adhesion. Herein, the lamination was carried out under a pressure of 2 kgf/cm$^2$.
The end of the adhered two sheets of separators was mounted to a UTM instrument (LLOYD Instrument LF Plus), and force was applied thereto in both directions at a rate of 300 mm/min. Then, the force required for separating the separator sheets from each other was measured.

(8) Evaluation of Electrical Resistance

The electrical resistance was determined by fabricating a coin cell by using each separator, allowing the coin cell to stand at room temperature for 1 day, and the resistance of the separator was measured by impedance analysis. The coin cell was fabricated as follows.

Manufacture of Negative Electrode

Artificial graphite as a negative electrode material, denka black as a conductive material and polyvinylidene fluoride (PVDF) as a binder were mixed at a weight ratio of 75:5:20, and N-methyl pyrrolidone (NMP) as a solvent was added thereto to prepare a negative electrode slurry.
The negative electrode slurry was coated on a copper current collector at a loading amount of 3.8 mAh/cm$^2$, followed by drying, to obtain a negative electrode.

Manufacture of Positive Electrode

LiCoO$_2$ as a positive electrode active material, denka black as a conductive material and polyvinylidene fluoride (PVDF) as a binder were added N-methyl pyrrolidone (NMP) as a solvent at a weight ratio of 85:5:10 to prepare a positive electrode active material slurry. The positive electrode active material slurry was coated on a sheet-like aluminum current collector, followed by drying, to form a positive electrode active material layer with a final positive electrode loading amount of 3.3 mAh/cm$^2$.

Manufacture of Coin Cell

The separator according to each of Example and Comparative Examples was interposed between the negative electrode and the positive electrode obtained as described above, and a non-aqueous electrolyte (1 M LiPF$_6$, ethylene carbonate (EC)/propylene carbonate (PC)/diethyl carbonate (DEC), volume ratio 3:3:4) was injected thereto to obtain a coin cell.

(9) Evaluation of Meltdown Temperature

The meltdown temperature was determined by taking each of the samples in each of the machine direction (MD) and the transverse direction (TD) and analyzing each sample through thermomechanical analysis (TMA). Particularly, a sample having a size of width x length of 4.8 mm x 8 mm was introduced to a TMA instrument (TA Instrument, Q400) and warmed from a temperature of 30°C to 220°C at a heating rate of 5°C/min, while applying a tension of 0.01 N thereto. As the temperature was increased, the sample showed a change in length. Then, the temperature at which point the sample was broken after a rapid increase in length was measured in each of the machine direction (MD) and the transverse direction (TD).

[Table 1]

| | | Example 1 | Comp. Ex. 1 | Comp. Ex. 2 |
|---|---|---|---|---|
| Thickness ($\mu$m) | | 11.0 | 6.0 | 11.0 |
| Air permeability (s/100 mL) | | 185 | 100 | 185 |
| Weight per unit area (g/m$^2$) | | 10.8 | 4.0 | 10.8 |
| Tensile strength (kgf/cm$^2$) | (MD) | 1700 | 2750 | 1725 |
| | (TD) | 1310 | 2200 | 1350 |
| Tensile elongation (%) | (MD) | 65 | 80 | 75 |
| | (TD) | 84 | 95 | 90 |
| Puncture strength (gf/15 mm) | | 435 | 420 | 440 |
| Heat shrinkage at 150°C (%) | (MD) | 3 | 62 | 3 |
| | (TD) | 2 | 50 | 2 |
| Adhesion to electrode (gf/25 mm) | (MD) | 50 | - | 53 |
| | (TD) | 64 | - | 43 |
| Electrical resistance ($\Omega$) | | 0.68 | 0.34 | 0.68 |
| Meltdown temperature (°C) | (MD) | 220 | 148 | 148 |
| | (TD) | 210 | 147 | 148 |

As can be seen from Table 1, the separator according to Example 1 shows excellent results in terms of heat shrinkage in each of the machine direction and the transverse direction, as determined after allowing the separator to stand at 150°C for 30 minutes, and adhesion to an electrode, and has excellent heat resistance.

On the contrary, the separator according to Comparative Example 1 shows poor results in terms of heat shrinkage in each of the machine direction and the transverse direction, as determined after allowing the separator to stand at 150°C for 30 minutes, and adhesion to an electrode, and has a significantly lower meltdown temperature as compared to the separator according to Example 1.

The separator according to Comparative Example 2 shows excellent results in terms of heat shrinkage in each of the machine direction and the transverse direction, as determined after allowing the separator to stand at 150°C for 30 minutes, and adhesion to an electrode, but has a significantly lower meltdown temperature as compared to the separator according to Example 1.

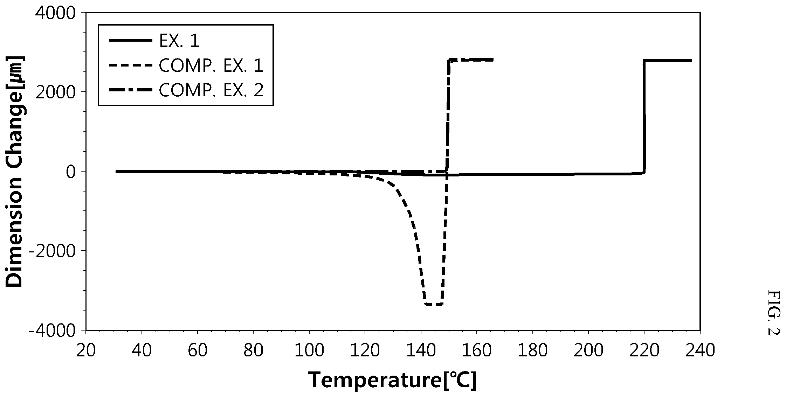

The meltdown temperature of each of the separators according to Example 1 and Comparative Examples 1 and 2 in the machine direction is shown in FIG. 2. The portion where a rapid change in dimension occurs corresponds to the meltdown temperature.

As can be seen from FIG. 2, each of the separators according to Comparative Examples 1 and 2 has a meltdown temperature of about 150°C.

On the contrary, it can be seen that the separator according to Example 1 has a meltdown temperature of about 220°C or higher.

## Claims

1. A crosslinked structure-containing separator for a lithium secondary battery, comprising:

   a crosslinked structure-containing polyolefin porous support having a crosslinked structure comprising polymer chains interconnected directly with one another;

an inorganic composite porous layer disposed on at least one surface of the crosslinked structure-containing polyolefin porous support and comprising an inorganic filler and a first binder polymer; and

a porous adhesive layer disposed on the inorganic composite porous layer and comprising a second binder polymer.

2. The crosslinked structure-containing separator for a lithium secondary battery according to claim 1, which shows a heat shrinkage of 20% or less in each of the machine direction and the transverse direction, as determined after allowing the separator to stand at 150°C for 30 minutes.

3. The crosslinked structure-containing separator for a lithium secondary battery according to claim 1, wherein the weight ratio of the inorganic filler to the first binder is 95:5-99.9:0.1.

4. The crosslinked structure-containing separator for a lithium secondary battery according to claim 1, wherein the first binder polymer comprises an acrylic polymer, polyacrylic acid, styrene butadiene rubber, polyvinyl alcohol, or two or more of them.

5. The crosslinked structure-containing separator for a lithium secondary battery according to claim 1, wherein the second binder comprises poly(vinylidene fluoride), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(methyl methacrylate), poly(ethylhexyl acrylate), poly(butyl acrylate), poly(acrylonitrile), poly(vinyl pyrrolidone), poly(vinyl acetate), poly(ethylhexyl acrylate-co-methyl methacrylate), poly(ethylene-co-vinyl acetate), polyethylene oxide, poly(arylate), or two or more of them.

6. The crosslinked structure-containing separator for a lithium secondary battery according to claim 1, wherein the porous adhesive layer has a pattern having at least one adhesive portion containing the second binder polymer and at least one non-coated portion having no adhesive portion.

7. The crosslinked structure-containing separator for a lithium secondary battery according to claim 1, which has a meltdown temperature of 160°C or higher.

8. The crosslinked structure-containing separator for a lithium secondary battery according to claim 1, which has a shutdown temperature of 145°C or less.

9. A method for manufacturing a crosslinked structure-containing separator for a lithium secondary battery, comprising the steps of:

(S1) preparing a slurry for forming an inorganic composite porous layer comprising an inorganic filler, a first binder polymer and a dispersion medium;

(S2) coating the slurry for forming an inorganic composite porous layer on at least one surface of a polyolefin porous support, followed by drying, to form an inorganic composite porous layer;

(S3) applying a coating solution for forming a porous adhesive layer comprising a second binder polymer, a solvent for the second binder polymer and a photoinitiator to the top surface of the inorganic composite porous layer;

(S4) dipping the resultant product of step (S3) in a solidifying solution containing a non-solvent for the second binder polymer, followed by drying, to form a porous adhesive layer; and

(S5) irradiating ultraviolet rays to the resultant product of step (S4).

10. The method for manufacturing a crosslinked structure-containing separator for a lithium secondary battery according to claim 9, wherein the content of the photoinitiator is 0.015-0.3 parts by weight based on 100 parts by weight of the polyolefin porous support.

11. The method for manufacturing a crosslinked structure-containing separator for a lithium secondary battery according to claim 9, wherein the weight ratio of the inorganic filler to the first binder polymer is 95:5-99.9:0.1.

12. The method for manufacturing a crosslinked structure-containing separator for a lithium secondary battery according to claim 9, wherein the first binder polymer comprises an acrylic polymer, polyacrylic acid, styrene butadiene rubber, polyvinyl alcohol, or two or more of them.

**13.** The method for manufacturing a crosslinked structure-containing separator for a lithium secondary battery according to claim 9, wherein the dispersion medium is an aqueous dispersion medium.

**14.** The method for manufacturing a crosslinked structure-containing separator for a lithium secondary battery according to claim 9, wherein the second binder polymer comprises poly(vinylidene fluoride), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(methyl methacrylate), poly(ethylhexyl acrylate), poly(butyl acrylate), poly(acrylonitrile), poly(vinyl pyrrolidone), poly(vinyl acetate), poly(ethylhexyl acrylate-co-methyl methacrylate), poly(ethylene-co-vinyl acetate), polyethylene oxide, poly(arylate), or two or more of them.

**15.** The method for manufacturing a crosslinked structure-containing separator for a lithium secondary battery according to claim 9, wherein the solvent for the second binder polymer comprises acetone, tetrahydrofuran, methylene chloride, chloroform, trimethyl phosphate, triethyl phosphate, methyl ethyl ketone (MEK), toluene, hexane, cyclohexane, dimethyl formamide (DMF), dimethyl acetamide (DMAc), N-methyl-2-pyrrolidone (NMP), or two or more of them.

**16.** The method for manufacturing a crosslinked structure-containing separator for a lithium secondary battery according to claim 9, wherein the photoinitiator comprises a Type 2 photoinitiator.

**17.** The method for manufacturing a crosslinked structure-containing separator for a lithium secondary battery according to claim 9, wherein the photoinitiator comprises thioxanthone (TX), a thioxanthone derivative, benzophenone (BPO), a benzophenone derivative, or two or more of them.

**18.** The method for manufacturing a crosslinked structure-containing separator for a lithium secondary battery according to claim 9, wherein the ultraviolet rays are irradiated at an irradiation light dose of 10-2000 mJ/cm$^2$.

**19.** A lithium secondary battery comprising a positive electrode, a negative electrode and a separator interposed between the positive electrode and the negative electrode, wherein the separator is the crosslinked structure-containing separator for a lithium secondary battery as defined in any one of claims 1 to 8.

FIG. 1

1

30

20

10

FIG. 2

## INTERNATIONAL SEARCH REPORT

| International application No. |
|---|
| **PCT/KR2022/006580** |

### A.    CLASSIFICATION OF SUBJECT MATTER

**H01M 50/451**(2021.01)i; **H01M 50/417**(2021.01)i; **H01M 50/489**(2021.01)i; **H01M 50/403**(2021.01)i; **H01M 10/052**(2010.01)i

According to International Patent Classification (IPC) or to both national classification and IPC

### B.    FIELDS SEARCHED

Minimum documentation searched (classification system followed by classification symbols)

H01M 50/451(2021.01); B29C 48/00(2019.01); B29C 48/08(2019.01); C08J 9/26(2006.01); H01M 10/052(2010.01); H01M 2/10(2006.01); H01M 2/14(2006.01); H01M 2/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 올레핀(olefin), 가교결합(crosslinking), 광개시제(photoinitiator)

### C.    DOCUMENTS CONSIDERED TO BE RELEVANT

| Category* | Citation of document, with indication, where appropriate, of the relevant passages | Relevant to claim No. |
|---|---|---|
| Y<br>A | KR 10-2020-0125870 A (W-SCOPE et al.) 05 November 2020 (2020-11-05)<br>    See paragraphs [0029]-[0043], [0051] and [0105]-[0106] and table 1. | 1-8,19<br><br>9-18 |
| Y | KR 10-2019-0128440 A (SAMSUNG SDI CO., LTD. et al.) 18 November 2019 (2019-11-18)<br>    See paragraphs [0025]-[0027] and [0054] and claims 1, 4, 9 and 13. | 1-8,19 |
| Y | KR 10-2015-0048082 A (LG CHEM, LTD.) 06 May 2015 (2015-05-06)<br>    See claims 1 and 6. | 6 |
| A | KR 10-2013-0092245 A (LG CHEM, LTD.) 20 August 2013 (2013-08-20)<br>    See paragraphs [0048]-[0052] and claims 1 and 8. | 1-19 |
| A | KR 10-2020-0112749 A (LG CHEM, LTD.) 05 October 2020 (2020-10-05)<br>    See claims 1-2. | 1-19 |

☐ Further documents are listed in the continuation of Box C.        ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 August 2022** | **19 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/006580**

| Patent document cited in search report | | | Publication date (day/month/year) | Patent family member(s) | | | Publication date (day/month/year) |
|---|---|---|---|---|---|---|---|
| KR | 10-2020-0125870 | A | 05 November 2020 | CN | 111864159 | A | 30 October 2020 |
| | | | | EP | 3731305 | A1 | 28 October 2020 |
| | | | | JP | 2020-182930 | A | 12 November 2020 |
| | | | | KR | 10-2181119 | B1 | 23 November 2020 |
| | | | | US | 2020-0343506 | A1 | 29 October 2020 |
| KR | 10-2019-0128440 | A | 18 November 2019 | CN | 112088447 | A | 15 December 2020 |
| | | | | EP | 3792995 | A1 | 17 March 2021 |
| | | | | EP | 3792995 | A4 | 26 January 2022 |
| | | | | US | 2021-0184314 | A1 | 17 June 2021 |
| | | | | WO | 2019-216548 | A1 | 14 November 2019 |
| KR | 10-2015-0048082 | A | 06 May 2015 | CN | 105684190 | A | 15 June 2016 |
| | | | | JP | 2017-500688 | A | 05 January 2017 |
| | | | | WO | 2015-060698 | A1 | 30 April 2015 |
| KR | 10-2013-0092245 | A | 20 August 2013 | KR | 10-1637477 | B1 | 07 July 2016 |
| KR | 10-2020-0112749 | A | 05 October 2020 | CN | 113632307 | A | 09 November 2021 |
| | | | | EP | 3937275 | A1 | 12 January 2022 |
| | | | | EP | 3937275 | A4 | 04 May 2022 |
| | | | | JP | 2022-527738 | A | 06 June 2022 |
| | | | | US | 2022-0173479 | A1 | 02 June 2022 |
| | | | | WO | 2020-197198 | A1 | 01 October 2020 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020210059581